# EUROPÄISCHE PATENTSCHRIFT

(11) **EP 0 686 682 B1**
(45) Veröffentlichungstag und Bekanntmachung des Hinweises auf die Patenterteilung: **03.12.1997**
(21) Anmeldenummer: 95108552.1
(22) Anmeldetag: 03.06.1995
(51) Int. Cl.: C09J 131/02

(54) **Dispersionsklebstoffe**
Dispersion adhesives
Adhésifs dispersés

(30) Priorität: 11.06.1994 DE 4420484
(43) Veröffentlichungstag der Anmeldung: 13.12.1995
(73) Patentinhaber: Clariant GmbH, 65929 Frankfurt am Main (DE)
(72) Erfinder: Jakob, Martin, Dr., D-65779 Kelkheim (DE); Matz, Volker, Dr., D-60529 Frankfurt (DE)

(56) Entgegenhaltungen:
- US-A- 3 700 611
- US-A- 3 932 335
- US-A- 4 695 606

## Beschreibung

Die vorliegende Erfindung betrifft wäßrige Dispersionsklebstoffe auf Polyvinylester-Basis mit einer praxisgerechten Topfzeit, deren Verfilmungen eine erhöhte Wasserresistenz aufweisen, die Herstellung dieser Dispersionsklebstoffe sowie deren Verwendung zum Verkleben von porösen und semiporösen Substraten.

Wäßrige Dispersionen von Polyvinylestern, insbesondere von Polyvinylacetat, werden als Weißleime zum Kleben von Holz und anderen porösen Substraten verwendet. Die Chemie dieser in großem Umfang industriell hergestellten Klebstoffe ist seit langem Gegenstand der Patentliteratur und ist in Fachpublikationen, beispielsweise in Wood Adhesives - Chemistry and Technology, Band 1, Kapitel 7, Marcel Dekker, New York, 1983, beschrieben worden.

Eine Untergruppe der Polyvinylesterdispersionen bilden solche mit erhöhter Wasserresistenz ihrer Verfilmungen. Die Anfälligkeit von Klebverbindungen auf Polyvinylester-Basis gegenüber Wasser beruht zum größten Teil auf der Anwesenheit von hydrophilen Stabilisierungsmitteln, insbesondere von Polyvinylalkohol, die üblicherweise bei der Herstellung der Klebstoffdispersion eingesetzt werden. Ein möglicher Weg, eine Verbesserung der Wasserresistenz zu erreichen, besteht daher beispielsweise darin, die Hydrophilie des Klebstoffs durch eine Vernetzung des Polyvinylalkohols mit reaktiven Verbindungen zu vermindern.

So ergibt laut DE-B-22 61 402 eine Polyvinylesterdispersion, der ein vernetzend wirkendes Harz, beispielsweise ein Harnstoff-Formaldehydharz zugemischt wird, in Kombination mit einer freien organischen oder anorganischen Säure oder einem sauren Metallsalz wasserfeste Verklebungen.

Ein weiterer seit längerem bekannter Weg, die Hydrophilie des Klebstoffes zu vermindern, besteht in der Copolymerisation von Vinylestern in Gegenwart von mit Polyvinylalkohol vernetzbaren Monomeren wie N-Methylol(meth)acrylamid. Ein solcher Weg wird beispielsweise in US-A-3 301 809 beschritten. In Kombination mit sauren Härtern, beispielsweise organischen Säuren oder sauren Ammoniumsalzen, werden wasserresistente Klebstoffe erhalten.

US-A-3 563 851 schlägt als Härtungsmittel für vernetzbare, mit Polyvinylalkohol stabilisierte Polyvinylacetat-Klebstoffdispersionen insbesondere die sauren Salze des Al(III) sowie des Cr(III) vor.

Gegenstand der Schriften DE-C-26 20 738 und DE-A-39 42 628 sind ebenfalls sauer katalysiert vernetzende Klebstoffsysteme auf Basis von Copolymerisaten von Vinylestern mit vernetzbaren Comonomeren, darunter N-Methylolacrylamid. Auch diese Klebemittel erfordern die Verwendung von wasserlöslichen starken Säuren oder deren Metallsalzen, insbesondere von Salzen des Cr(III), Al(III), Fe(III) und Zr(IV). Zum Erreichen heißwasserbeständiger Klebverbindungen gemäß der Prüfnorm DIN EN 204, die der Beanspruchungsgruppe D4 (vormals DIN 68602 B4) genügen, ist gemäß DE-A-39 42 628 zusätzlich die Copolymerisation hochverzweigter Carbonsäurevinylester erforderlich, wenn als Härter saure Aluminiumsalze verwendet werden.

Gegenüber diesen ausschließlich durch saure Härter katalysiert vernetzenden Klebstoffsystemen ist auch bekannt, den Dispersionen nachträglich verschiedene Additive zuzusetzen, die die Wasserfestigkeit von mit diesen Dispersionen hergestellten Klebeverbindungen erhöhen. Die Wirkung dieser Additive beruht auf Vernetzungsreaktionen, die den Polyvinylalkohol einbeziehen.

Eine Gruppe dieser Additive bilden hydrophobe aliphatische oder aromatische Polyisocyanate. In US-A-3 931 088 wird der Zusatz polyfunktioneller Isocyanatverbindungen, beispielsweise Toluidendiisocyanat, zu wäßrigen Klebstoffdispersionen erwähnt, die Polyvinylalkohol enthalten. Die Zugabe dieser Verbindungen erfolgt in Lösemitteln.

Als Weiterentwicklung beschreibt EP-A-0 206 059 eine in Wasser dispergierbare Polyisocyanat-Zubereitung, in der die Isocyanatgruppen mit Emulgatoren partiell maskiert sind. Der Zusatz dieses Produkts zu Polyvinylacetat-Dispersionen ergibt heißwasserbeständige Verklebungen, die in die Beanspruchungsgruppe DIN EN 204/D4 einzuordnen sind.

Eine weitere Gruppe von Additiven, die die Wasserresistenz von Dispersionsklebstoffen verbessern, stellen polyfunktionelle Aldehyde dar.

In US-A-3 932 335 werden durch Zusatz von Glyoxal in Kombination mit wasserlöslichen Polyolen Polyvinylesterdispersionen erhalten, die wasserfeste Klebverbindungen ergeben.

EP-A-0 191 460 beschreibt mit Polyvinylalkohol stabilisierte Polyvinylacetatdispersionen, die mit Glutardialdehyd vernetzt werden und über einen Zeitraum von mindestens 30 Minuten kochwasserresistente Filme liefern.

Für den Anwender werfen die vorgenannten Härtersysteme einige Nachteile auf. Die Verwendung saurer Härter führt insbesondere bei Einsatz größerer Mengen zu einem Viskositätsabfall der Dispersionen. Zudem bewirken größere Mengen dieser Zusätze, insbesondere im Fall der Chrom- und Aluminiumsalze, einen unerwünschten Anstieg des Weißpunktes der Dispersionen sowie einen Abfall der Kurzabbindefestigkeit. Bei einer separaten Zumischung einer sauren Salzlösung kann diese an den Auftragsvorrichtungen Korrosion hervorrufen. Darüber hinaus stellen die wäßrigen Lösungen der Salze wegen ihrer reizenden Wirkung Gefahrstoffe bei der Applikation dar. Bei der Verwendung der überdies toxischen Chrom(III)-Salze stört die blaugrüne Klebfuge den optischen Eindruck der verleimten Gegenstände besonders bei hellen Holzarten.

Der Einsatz von Harnstoff-Formaldehydharzen gemäß DE-B-22 61 402 führt zu einer allmählichen Freisetzung von Formaldehyd aus dem Klebstoff. Bei der Verwendung vernetzender Polyisocyanate gemäß EP-A-0 206 059 ist ein allmähliches Aufschäumen der Zubereitungen bei der Applikation durch freigesetztes Kohlendioxid störend (Vergleichsbeispiele V1, V2 und V3 Tabelle 1).

Gemäß EP-A-0 191 460 unter Zusatz von Polyaldehyden hergestellte Dispersionsklebstoffe erfüllen die bestehenden Anforderungen bereits teilweise, jedoch können mit den Systemen, deren Klebverbindungen eine hohe Wasserbeständigkeit aufweisen, nicht gleichzeitig die geforderten praxisgerechten Topfzeiten von mindestens 8 Stunden erreicht werden. Zudem erzeugen derartige Systeme aufgrund des hohen Anteils an freiem Polyaldehyd eine starke Geruchsbelästigung (Vergleichsbeispiel V4, Tabelle 1).

Es bestand demnach die Aufgabe, eine Polyvinylesterdispersion für Klebstoffe bereitzustellen, die bei praxisgerechten Topfzeiten verbesserte Klebeigenschaften besitzt und Klebverbindungen mit einer gegenüber vergleichbaren Systemen erhöhten Wasserbeständigkeit ermöglicht, ohne die Nachteile der bekannten Klebstoffe aufzuweisen.

Es wurde nun gefunden, daß diese Aufgabe durch eine wäßrige Polyvinylester-Dispersion, die neben polymeren Schutzkolloiden wasserlösliche mit den Schutzkolloiden komplexierbare Verbindungen und Derivate von Polyaldehyden enthält, aus denen im Sauren Aldehydgruppen freisetzbar sind, gelöst werden kann.

Gegenstand der vorliegenden Erfindung ist also ein wäßriger Dispersionsklebstoff mit einem pH-Wert zwischen 2 und 6, enthaltend homo- oder copolymere Polyvinylester, polymere Schutzkolloide, mit den polymeren Schutzkolloiden komplexierbare wasserlösliche Verbindungen und zumindest teilweise maskierte Polyaldehyde vorzugsweise mit mindestens 3 Kohlenstoffatomen, aus denen in sauren Medien Aldehydgruppen kontrolliert freisetzbar sind.

Als Dispersionspolymere, die als Polymerbasis in den erfindungsgemäßen Dispersionsklebstoffen eingesetzt werden, sind homo- oder copolymere Polyvinylester geeignet.

Als Monomere für diese homo- oder copolymeren Polyvinylester kommen Vinylformiat, Vinylacetat, Vinylpropionat, Vinylisobutyrat, Vinylpivalat, Vinyl-2-ethylhexanoat, Vinylester von gesättigten verzweigten Monocarbonsäuren mit 9 bis 10 Kohlenstoffatomen im Säurerest, Vinylester von längerkettigen gesättigten oder ungesättigten Fettsäuren wie beispielsweise Vinyllaurat, Vinylstearat sowie Vinylester der Benzoesäure und substituierter Derivate der Benzoesäure wie Vinyl-p-tert.-butylbenzoat in Frage. Unter diesen ist jedoch Vinylacetat besonders bevorzugt. Die genannten Vinylester können im Polyvinylester auch nebeneinander vorliegen. Der Anteil dieser Vinylester im Polymerisat beträgt mindestens 50 Gew.-%, vorzugsweise mindestens 75 Gew.-%.

Weitere ethylenisch ungesättigte Monomere, die mit den Vinylestern copolymerisiert werden können, sind α,β-ungesättigte Säuren, beispielsweise Acrylsäure, Methacrylsäure, sowie deren Ester mit primären und sekundären gesättigten einwertigen Alkoholen mit 1 bis 18 Kohlenstoffatomen, beispielsweise Methanol, Ethanol, Propanol, Butanol, 2-Ethylhexylalkohol, cycloaliphatischen Alkoholen sowie längerkettigen Fettalkoholen. Weiterhin können α,β-ungesättigte Dicarbonsäuren, beispielsweise Maleinsäure, Fumarsäure, Itaconsäure oder Citraconsäure, sowie deren Mono- oder Diester mit gesättigten einwertigen aliphatischen Alkoholen mit 1 bis 18 Kohlenstoffatomen mitverwendet werden. Der Anteil dieser Comonomere an der Gesamtmonomerenmenge beträgt bis zu 25 Gew.-%, vorzugsweise 0,1 bis 15 Gew.-%.

Geeignete Comonomere sind weiterhin ethylenisch ungesättigte Kohlenwasserstoffe, wie Ethylen oder α-Olefine mit 3-18 Kohlenstoffatomen, beispielsweise Propylen, Butylen, ferner Styrol, Vinyltoluol, Vinylxylol sowie halogenierte ungesättigte aliphatische Kohlenwasserstoffe, beispielsweise Vinylchlorid, Vinylfluorid, Vinylidenchlorid, Vinylidenfluorid. Der Anteil dieser Comonomere an der Gesamtmonomerenmenge beträgt bis zu 50 Gew.-%, vorzugsweise 1 bis 25 Gew.-%.

Weiterhin können mehrfach ethylenisch ungesättigte Monomere beispielsweise Diallylphthalat, Diallylmaleinat, Triallylcyanurat, Tetraallyloxyethan, Divinylbenzol, Butandiol-1,4-dimethacrylat, Triethylenglykoldimethacrylat, Divinyladipat, Allyl-(meth)-acrylat, Vinylcrotonat, Methylenbisacrylamid, Hexandioldiacrylat, Pentaerythroldiacrylat und Trimethylolpropantriacrylat im Polymerisat enthalten sein. Der Anteil dieser Comonomere an der Gesamtmonomerenmenge beträgt bis zu 10 Gew.-%, vorzugsweise 0,01 bis 2 Gew.-%.

Besonders geeignet sind Comonomere mit N-funktionellen Gruppen, darunter insbesondere(Meth)acrylamid, Allylcarbamat, Acrylnitril, N-Methylol(meth)acrylamid, N-Methylolallylcarbamat sowie die N-Methylolester, -alkylether oder Mannichbasen des N-Methylol(meth)acrylamids oder N-Methylolallylcarbamats, Acrylamidoglykolsäure, Acrylamidomethoxyessigsäuremethylester, N-(2,2-Dimethoxy-1-hydroxyethyl)acrylamid, N-Dimethylaminopropyl(meth)acrylamid, N-Methyl-(meth)acrylamid, N-Butyl(meth)acrylamid, N-Cyclohexyl(meth)acrylamid, N-Dodecyl (meth)acrylamid, N-Benzyl (meth)acrylamid, p-Hydroxyphenyl (meth)acrylamid, N-(3-Hydroxy-2,2-dimethylpropyl)methacrylamid, Ethylimidazolidonmethacrylat, N-Vinylformamid, N-Vinylpyrrolidon. Der Anteil dieser Comonomere an der Gesamtmonomerenmenge beträgt bis zu 15 Gew.-%, vorzugsweise 0,1 bis 10 Gew.-%.

Weiterhin besonders geeignete Comonomere, die aufgrund ihrer funktionellen Gruppen in Kombination mit den Derivaten der Polyaldehyde die klebtechnischen Eigenschaften und die Wasserfestigkeit der Dispersion verbessern können, sind hydroxyfunktionelle Monomere wie Hydroxyethyl(meth)acrylat, Hydroxypropyl-(meth)acrylat sowie deren Addukte mit Ethylenoxid oder Propylenoxid. Der Anteil dieser Comonomeren an der Gesamtmonomerenmenge beträgt bis zu 25 Gew.-%, vorzugsweise 0,1 bis 15 Gew.-%.

Besonders geeignet sind ferner über Carbonylgruppen vernetzbare oder selbstvernetzende Comonomere aus der Gruppe Diacetonacrylamid, Allylacetoacetat, Vinylacetoacetat sowie Acetoacetoxyethyl(meth)acrylat. Der Anteil dieser Comonomere an der Gesamtmonomerenmenge beträgt bis zu 10 Gew.-%, vorzugsweise 0,01 bis 5 Gew.-%.

Der Anteil der neben den Vinylestereinheiten im Polymerisat enthaltenen Comonomereinheiten beträgt zusammengenommen bis zu 50 Gew.-%.

Neben dem homo- oder copolymeren Polyvinylester enthalten die erfindungsgemäßen Klebstoffdispersionen polymere Schutzkolloide. Beispielsweise geeignet ist Polyvinylalkohol, insbesondere Polyvinylalkohol vom Hydrolysegrad 60-100 Mol.-%, vorzugsweise 70 bis 98 Mol.-%, und Viskositäten der 4 Gew.-%igen wäßrigen Lösungen bei 20 °C von 2 bis 70 mPa·s. Die Verwendung von Umsetzungsprodukten des Polyvinylalkohols mit Diketen oder copolymerer, Carboxylgruppen tragender Typen von Polyvinylalkoholen ist ebenfalls zulässig. Weiterhin können als Schutzkolloide veretherte Cellulosederivate, beispielsweise Hydroxyethylcellulose oder Carboxymethylcellulose, eingesetzt werden. Diese können entweder alleine oder in Kombination mit Polyvinylalkohol verwendet werden. Ebenfalls geeignet sind Polyvinylpyrrolidon, Polycarbonsäuren wie Polyacrylsäure sowie Copolymere der Maleinsäure oder des Maleinsäureanhydrids mit ethylenisch ungesättigten Verbindungen wie Methylvinylether oder Styrol.

Bezogen auf den Feststoffanteil, beträgt der Anteil der polymeren Schutzkolloide vorzugsweise 1 bis 20 Gew.-%, insbesondere 2 bis 10 Gew.-%.

Zusätzlich zu den polymeren Schutzkolloiden können bis zu 2 Gew.-%, bezogen auf das Polymerisat, nichtionische und/oder ionische Emulgatoren in der Polymerisationsflotte mitverwendet werden.

Unter zumindest teilweise maskierten Polyaldehyden, also Verbindungen mit mindestens zwei Aldehydgruppen, aus denen in wäßrig sauren Medien Aldehydgruppen freigesetzt werden, werden Verbindungen verstanden, die vorzugsweise bei einem pH-Wert zwischen 2 und 6, insbesondere zwischen 2,5 und 4 einer kontrollierten Hydrolyse unterliegen und dabei eine einstellbare Menge an Aldehydgruppen pro Zeiteinheit freisetzen. In diesen Derivaten der Polyaldehyde ist zumindest ein Teil der Aldehydgruppen, vorzugsweise die Gesamtmenge der Aldehydgruppen, zunächst blockiert.

Besonders bevorzugte Derivate der Polyaldehyde sind deren Bisulfitaddukte. Als Gegenionen sind in diesen Bisulfitaddukten vorzugsweise Lithium-, Natrium-, Kalium-, Magnesium-, Calcium-, Aluminium-, Ammoniumionen oder substituierte Ammoniumionen enthalten. Geeignet sind beispielsweise die Bisulfitaddukte von Malondialdehyd, Propanondial (Mesoxaldialdehyd), Succindialdehyd, Butanondial, Glutardialdehyd, Adipaldehyd, β-Methylglutardialdehyd, Pimelindialdehyd, Suberindialdehyd (Kork-säuredialdehyd), Malein- und Fumarsäuredialdehyd, Korksäuredialdehyd, Sebacinsäuredialdehyd, Äpfelsäuredialdehyd, sowie Phthaldialdehyd, Isophthaldialdehyd, Terephthaldialdehyd sowie kernsubstituierten Derivaten dieser Verbindungen. Insbesondere geeignet sind Bisulfitaddukte aliphatischer Dialdehyde mit mindestens 3 Kohlenstoffatomen. Unter diesen sind die Glutardialdehydbisalkalihydrogensulfite besonders bevorzugt.

Weitere erfindungsgemäß geeignete Derivate der mindestens bifunktionellen Aldehyde sind deren offenkettige Acetale mit aliphatischen (C₁-C₂₀)-, vorzugsweise (C₁-C₁₂)-Monoalkoholen, insbesondere Methanol und Ethanol, sowie deren cyclische Acetale mit mindestens bifunktionellen Alkoholen, vorzugsweise Ethylenglykol, 1,2-Propylenglykol, 1,3-Propylenglykol.

Beispielhaft seien genannt Chlormalondialdehydbisdiethylacetal, Succindialdehydmono- und -bisdimethylacetal, Succindialdehydbisdiethylacetal, 2-Bromsuccindialdehydbisdimethylacetal, Oximinosuccindialdehydbisdimethylacetal und die Bisdimethyl- und Bisdiethylacetale des Maleindialdehyds.

Unter diese Gruppe fallen ferner die intramolekularen cyclischen Acetale des Succindialdehyds, Maleindialdehyds und Glutardialdehyds sowie höher ringsubstituierte Derivate von ihnen wie 2,5-Dimethoxytetrahydrofuran, 2,5-Diethoxytetrahydrofuran, 2,5-Dihydro-2,5-dimethoxyfuran, 2,5-Dihydro-2,5-diethoxyfuran beziehungsweise 3-Formyl-2,5-dimethoxytetrahydrofuran sowie 2,6-Dimethoxytetrahydro-2H-pyran und 2,6-Diethoxytetrahydro-2H-pyran. Besonders geeignete Verbindungen aus dieser Gruppe sind die offenkettigen Bisdimethyl- und Bisdiethylacetale des Malondialdehyds und Glutardialdehyds und die cyclischen Acetale des Succindialdehyds.

Weitere geeignete Derivate von Polyaldehyden sind die Enolether, Enolester, Acylate oder gemischten Acylatether polyfunktioneller Aldehyde. Unter diesen existieren auch Verbindungen, die Aldehydgruppen enthalten, die aus konstitutionellen Gründen überwiegend in der Enolform vorliegen, beispielsweise Oxybrenztraubensäurealdehyd (Redukton). Diese, sowie Umsetzungsprodukte der Enole, in denen die restlichen, nicht in der Enolform vorliegenden Aldehydgruppen weiter maskiert sein können, stellen ebenfalls geeignete Derivate dar.

Erfindungsgemäß ebenfalls geeignete Derivate von Polyaldehyden stellen die spaltbaren Umsetzungsprodukte der Polyaldehyde mit Stickstoff-Verbindungen dar. Zu diesen Derivaten zählen die Oxime, Oximester, Oximether, Imine (Schiff- sche Basen), Enamine, Aminale, Hydrazone, Semicarbazone, a,a-Diurethane und Enaminurethane polyfunktioneller Aldehyde.

Beispielhaft seien genannt Glutardialdehyddioxim, Phthaldialdehydmono- und -dioxim, Phthaldialdehydoximsemicarbazon, Isophthalaldoxim, Terephthalaldoxim, Terephthalaldehyddihydrazon, die Anile des Malondialdehyds, Succindialdehyds und Glutardialdehyds.

Zwischen den hier genannten Maskierungsmöglichkeiten sind selbstverständlich auch Mischformen im Rahmen der Erfindung zulässig.

Die verwendete Menge der Derivate der Polyaldehyde beträgt 0,001 Gew.-% bis 10 Gew.-%, bezogen auf die Festsubstanz der Klebstoffdispersion, und hängt von der Art der eingesetzten Derivate sowie von der Zusammensetzung der Dispersion ab. Der bevorzugte Bereich liegt zwischen 0,01 und 5 Gew.-%, insbesondere zwischen 0,1 und 2 Gew.-%, bezogen auf die Festsubstanz der Klebstoffdispersion.

Als mit den polymeren Schutzkolloiden komplexierbare Verbindungen eignen sich vorzugsweise Salze, insbesondere die sauren Salze mit mehrwertigen komplexierbaren Kationen, wie sie beispielsweise in DE-B-22 61 402, DE-O-26 20 738 und DE-A-39 42 628 aufgeführt sind. Verwendet werden vorzugsweise die wasserlöslichen Metallsalze des Al(III) oder Zr(IV), insbesondere Aluminiumchlorid, Aluminiumnitrat, und Zirkonoxychlorid. Ebenfalls zur Komplexbildung mit den polymeren Schutzkolloiden geeignete Verbindungen stellen Säuren und Salze mit Oxoanionen, vorzugsweise Oxoanionen die zur Bindung von Polyanionen befähigt sind, beispielsweise Borate und Phosphate, dar. Besonders geeignet sind die freie Borsäure und Phosphorsäure. Der Anteil der mit den Schutzkolloiden komplexierbaren Verbindungen beträgt vorzugsweise 0,1 bis 20 Gew.-%, insbesondere 0,5 bis 10 Gew.-%, bezogen auf die Klebstoffdispersion.

Die Klebstoffdispersion kann weitere übliche Additive enthalten, beispielsweise Filmbildehilfsmittel zur MFT-Erniedrigung, Weichmacher, Entschäumer, Füllstoffe und Konservierungsmittel.

Der Feststoffgehalt der erfindungsgemäßen Klebstoffdispersion beträgt vorzugsweise 20 bis 65 Gew.-%, insbesondere 30 bis 60 Gew.-%.

Die Klebstoffdispersion besitzt einen sauren pH-Wert, der in einem Bereich liegt, in dem die erfindungsgemäßen Derivate der Polyaldehyde langsam hydrolysiert werden und die Aldehydgruppen kontrolliert freigesetzt werden. Dieser pH-Bereich liegt zwischen 2 und 6, vorzugsweise zwischen 2,5 und 4. Ein geeigneter pH-Wert kann schon nach der Emulsionspolymerisation der homo- oder copolymeren Vinylester erreicht sein oder er kann durch Zugabe von sauren Verbindungen nachträglich eingestellt werden.

Um den pH-Wert im angestrebten sauren Bereich einzustellen, sind organische oder anorganische Lewis- und Brønsted-Säuren geeignet. Vorzugsweise geeignete Brønsted-Säuren weisen einen pKₛ-Wert von <2,5 auf, beispielsweise Salzsäure, Schwefelsäure, Salpetersäure, Perchlorsäure, p-Toluolsulfonsäure, insbesondere Phosphorsäure. Als Lewis-Säure besonders geeignet sind die sauren Salze komplexierbarer Metallionen, insbesondere Aluminiumchlorid, Aluminiumnitrat und Zirkonoxychlorid.

Gegenstand der vorliegenden Erfindung ist auch ein Verfahren zur Herstellung des erfindungsgemäßen Dispersionsklebstoffs. Dazu wird vorzugsweise zunächst eine homo- oder copolymere Polyvinylester-Dispersion hergestellt, die die polymeren Schutzkolloide und gegebenenfalls Emulgatoren enthält.

Die Herstellung der Polyvinylester-Dispersion wird unter den üblichen kontinuierlichen oder diskontinuierlichen Verfahrensweisen der radikalischen Emulsionspolymerisation vorgenommen. Hierbei kommen wasserlösliche und/oder öllösliche Initiatorsysteme wie Peroxodisulfate, Azoverbindungen, Wasserstoffperoxid, organische Hydroperoxide oder Dibenzoylperoxid zum Einsatz. Diese können entweder für sich oder in Kombination mit reduzierenden Verbindungen wie Fe(ll)-Salzen, Natriumpyrosulfit, Natriumhydrogensulfit, Natriumsulfit, Natriumdithionit, Natriumformaldehydsulfoxylat, Ascorbinsäure als Redoxkatalysatorsystem verwendet werden.

Die polymeren Schutzkolloide und Emulgatoren können vor, während oder nach der Polymerisation zugegeben werden. Zu dieser Dispersion werden dann die mit den polymeren Schutzkolloiden komplexierbaren Verbindungen und die Derivate der Polyaldehyde zugesetzt und, falls erforderlich, der pH-Wert durch Zugabe von Lewis- oder Brønsted-Säure in den geforderten Bereich gebracht.

Es ist insbesondere bevorzugt, daß die mit den polymeren Schutzkolloiden versehene Polyvinylester-Dispersion zunächst mit den komplexierbaren Verbindungen, vorzugsweise sauren Metallsalzen beziehungsweise Salzen oder Säuren von Oxoanionen, insbesondere Aluminiumchlorid, Aluminiumnitrat oder Zirkonoxychlorid beziehungsweise Phosphorsäure oder Borsäure, vorformuliert wird und als Zweikomponentensystem zuletzt erst mit den Derivaten der Polyaldehyde versetzt wird.

Die Zugabe dieser Komponenten zur Polyesterdispersion kann entweder durch Auflösen der reinen Verbindungen in der Dispersion oder durch Hinzufügen einer Lösung in einem geeigneten Lösemittel, beispielsweise aliphatischen Alkoholen, oder einer wäßrigen Lösung erfolgen. Vorzugsweise erfolgt der Zusatz in Form einer konzentrierten wäßrigen Lösung, um den Viskositätsabfall in der Klebstoffdispersion zu minimieren. Die als Derivate der Polyaldehyde besonders bevorzugt einzusetzenden Verbindungen Glutardialdehydbisnatriumhydrogensulfit und Glutardialdehydbiskaliumhydrogensulfit können beispielsweise in Form einer wäßrigen Lösung von ca. 20 Gew.-% zugegeben werden.

Einem unerwünschten Viskositätsabfall der Dispersion nach Zugabe einer wäßrigen Lösung der Derivate der Polyaldehyde kann vorteilhaft vorgebeugt werden, indem der wäßrigen Lösung zuvor weitere, die Viskosität dieser Lösung erhöhende Zusätze beigemischt werden. Dies können insbesondere die polymeren Schutzkolloide, vorzugsweise Polyvinylalkohol, Polyvinylpyrrolidon oder veretherte Cellulosederivate, beispielsweise Hydroxyethylcellulose oder Carboxymethylcellulose sein. Die Lösung wird mit üblicher Vorrichtungen, beispielsweise Flügel- oder Ankerrührer, in die Dispersion eingearbeitet.

Im Rahmen des erfindungsgemäßen Verfahrens zulässig ist auch eine Vorformulierung der Polyvinylesterdispersion mit den Derivaten der Polyaldehyde. Dazu wird zunächst eine homo- oder copolymere Polyvinylester-Dispersion in Gegenwart von polymeren Schutzkolloiden hergestellt, die bei einem pH-Wert oberhalb von 4 zuerst mit zumindest teilweise maskierten Polyaldehyden und anschließend mit komplexierbaren Metallsalzen oder Säuren versetzt wird. In diesem Fall sollte die Dispersion möglichst einen neutralen pH-Wert, vorzugsweise oberhalb von 5, insbesondere oberhalb von 6 besitzen, bei dem die Derivate der Polyaldehyde stabil bleiben. Zu diesem Zweck kann der pH-Wert der Dispersion auch nachträglich durch Zugabe üblicher Neutralisationsmittel auf den geforderten Wert angehoben werden. Das System wird dann vorzugsweise in einem Zweikomponentensystem durch Zusatz geeigneter Mengen einer sauren komplexierbaren Verbindung, insbesondere einer wäßrigen Lösung von Aluminiumchlorid, Aluminiumnitrat, Zirkonoxychlorid oder Phosphorsäure aktiviert.

Eine weitere Ausgestaltung dieses Verfahrens, bei dem eine Vorformulierung der Polyvinylesterdispersion mit den Derivaten der Polyaldehyde vorgenommen wird, besteht darin, daß bei Verwendung der erfindungsgemäß besonders bevorzugten Bisulfitaddukte von polyfunktionellen Aldehyden diese auch in situ in der Klebstoffdispersion erzeugt werden können. Dazu wird zunächst eine homo- oder copolymere Polyvinylester-Dispersion in Gegenwart von polymeren Schutzkolloiden hergestellt, die bei pH-Werten oberhalb von 5 mit polyfunktionellen Aldehyden und Verbindungen, die in wäßrigen Systemen Hydrogensulfitionen liefern, und anschließend mit komplexierbaren Metallsalzen oder Säuren versetzt wird.

Die Dispersion besitzt einen zur Bildung der Bisulfit-Addukte geeigneten pH-Wert-Bereich, der entweder vor oder nach Zugabe der Hydrogensulfitionen lieferenden Salze mit üblichen Neutralisationsmitteln, beispielsweise verdünnter Natronlauge, eingestellt wird. Der pH-Wert sollte in diesem Fall oberhalb von 5, insbesondere oberhalb von 6, liegen. Geeignete Verbindungen, die in wäßrigen Systemen Hydrogensulfitionen liefern sind Salze wie Alkalihydrogensulfite, Alkalisulfite und Alkalipyrosulfite. Besonders bevorzugt sind die entsprechenden Natriumsalze. Zu dieser Dispersion wird dann der polyfunktionelle Aldehyd in Substanz oder in Form einer vorzugsweise wäßrigen Lösung zugegeben und mittels üblicher Rühraggregate gleichmäßig in der Dispersion verteilt. Der Maskierungsgrad des polyfunktionellen Aldehyds kann durch Wahl des Verhältnisses zwischen der Stoffmenge an Hydrogensulfit und den vorhandenen Aldehydgruppen eingestellt werden. Vorzugsweise sollte ein mindestens stöchiometrisches Verhältnis zwischen Hydrogensulfitionen einerseits und den vorhandenen Aldehydgruppen andererseits eingestellt werden. Vorteilhafterweise wird die Menge an zugesetztem Salz so bemessen, daß ein kleiner Überschuß von mindestens 0,1 Äquivalenten Hydrogensulfit pro Aldehydgruppe vorliegt.

Gleichermaßen zulässig ist eine Variante der oben beschriebenen Verfahrensweise, bei der zunächst der polyfunktionelle Aldehyd in der gegebenenfalls zuvor auf einen pH-Wert oberhalb von 5 angehobenen Dispersion vorgelegt wird und anschließend durch Zusatz der oben beschriebenen, nach Dissoziation Hydrogensulfitionen liefernden Salze in der wäßrigen Phase der Dispersion zu den erfindungsgemäß maskierten Produkten umgesetzt wird.

In beiden Fällen erfolgt eine Aktivierung des Systems mit den bereits beschriebenen sauren komplexierbaren Verbindungen.

Die erfindungsgemäßen Klebstoffdispersionen weisen Topfzeiten von mindestens 8 Stunden, vorzugsweise mindestens 16 Stunden und insbesondere mindestens 24 Stunden auf. Klebverbindungen aus den erfindungsgemäßen Dispersionsklebstoffen besitzen eine gegenüber vergleichbaren Systemen verbesserte Wasserbeständigkeit. Sie genügen damit gemäß der Prüfnorm DIN EN 204 wenigstens der Beanspruchungsgruppe D2, vorzugsweise D3, insbesondere D4.

Gegenstand der Erfindung ist weiterhin die Verwendung des erfindungsgemäßen Dispersionsklebstoffs zum Verkleben von porösen und semiporösen Substraten.

Die spezielle Eignung der erfindungsgemäßen Klebstoffzubereitungen liegt in der Anwendung als kochwasserresistenter Klebstoff insbesondere für cellulosische Substrate wie Holz. Die Klebstoffe eignen sich für die manuelle oder maschinelle Applikation sowie insbesondere auch für Anwendungen, in denen die Klebfugen durch hochfrequente Wechselströme gehärtet werden.

Weitere generelle Anwendungsbeispiele sind wasserfeste Verklebungen von Papier, Pappe, Wellpappe, Schaumstoff, Zement, Leder, Textil oder Preßschichtstoffen. Andere Anwendungen liegen in Klebstoffen für den Baubereich als Fußboden-, Wand- oder Deckenklebstoff oder als Möbelfolien- oder Teppichrückenkleber.

Weitere Eignungsgebiete liegen in wasserfesten Bindemitteln für Holzfaserplatten oder Faserleder sowie Bindemittel für Dämm-Materialien aus Papier- oder Kunststoff-Fasern, ferner in wasserresistenten Baustoffdispersionen als Bindemittel für Putz oder Zement. Darüberhinaus kann bei Baustoffdispersionen die Sperrwirkung gegenüber Lösemitteln in Beton und Baumörteln durch die erfindungsgemäßen Vernetzungsmittel verbessert werden.

Ein Einsatzgebiet stellt ebenfalls der textile Bereich dar, in dem sich die erfindungsgemäßen Klebstoffdispersionen als Bindemittel für Textil und Non-Woven eignen sowie für den Textildruck und als Textilappretur eingesetzt werden können.

Es ist hervorzuheben, daß es sich bei den erfindungsgemäßen Dispersionsklebstoffen vorteilhafterweise um Systeme handelt, die Isocyanat-frei und weitgehend auch Formaldehyd-frei sind. Insbesondere in Dispersionen, die Formaldehydabgebende Bestandteile enthalten, bieten die besonders bevorzugten Hydrogensulfitaddukte der Polyaldehyde darüber hinaus den weiteren Vorteil, daß das bei der sauren Spaltung und der nachfolgenden Vernetzung freiwerdende Hydrogensulfit auch noch als Formaldehydfänger fungiert und so die Konzentration an freiem Formaldehyd in den Klebstoffen oder Bindemitteln deutlich verringert.

Die nachfolgenden Beispiele dienen der Erläuterung der Erfindung. Die in den Beispielen angegebenen Teile und Prozente beziehen sich auf das Gewicht, soweit nicht anders vermerkt.

### Basisdispersion A1

In einem Glasrührkesselreaktor mit Ankerrührer, der mit Zulaufmöglichkeiten, Rückflußkühler, Mantelheizung und -kühlung versehen ist, wird eine Lösung von 6 Teilen ®Mowiol 18-88 (Hoechst AG, teilverseifter Polyvinylalkohol vom Hydrolysegrad 88 Mol-%) in 92 Gewichtsteilen entionisiertem Wasser hergestellt. Nach Zugabe von 0,1 Teilen Entschäumungsmittel ®Agitan 280 (Münzing-Chemie) und 0,006 Gew.-Teilen ®Rongalit C (Natrium-Formaldehyd-Sulfooxylat, BASF) werden 5 von insgesamt 100 Teilen Vinylacetat einemulgiert. Die Innentemperatur wird auf 50 °C angehoben und die Polymerisation nach Zugabe einer Lösung von 0,03 Teilen ®Trigonox AW 70 (tert.-Butylhydroperoxid 70 %ig, Akzo- Chemie) in 0,5 Teilen Wasser gestartet.

Nach dem Anspringen der Reaktion werden innerhalb von 3 Stunden zwei Zuläufe, bestehend einerseits aus 95 Teilen Vinylacetat mit 0,09 Teilen tert.-Butyl-hydroperoxid (70 %ig) und andererseits 0,03 Teilen Rongalit C in 10 Gewichtsteilen Wasser parallel zudosiert. Die Manteltemperatur wird so gesteuert, daß die Polymerisation rückflußfrei bei einer langsam steigenden Innentemperatur von 68 °C am Start bis ca. 80 °C verläuft. Anschließend wird mit nachträglichen Zugaben von wäßrigen Lösungen von 0,014 Teilen tert.-Butylhydroperoxid (70 %ig) und 0,004 Teilen Rongalit C nachpolymerisiert. Nach dem Abkühlen werden 4 Teile Butyldiglykolacetat langsam in die Dispersion eingerührt.
Feststoffgehalt: 50,8 %
Viskosität Brookfield RVT, Spindel 6, 20 U/M.: 23.600 mPa·s

### Basisdispersionen A2 bis A4

Die Herstellung erfolgt in der oben beschriebenen Weise, mit dem Unterschied, daß nur 80 Teile Wasser in der Polymerisationsflotte verwendet werden und als dritter Zulauf jeweils eine Lösung von 0,5 (bei A2), 1 (bei A3) und 2 Teilen N-Methylolacrylamid (bei A4) in 12 Teilen Wasser zudosiert werden. Die Lösungen werden durch Verdünnen der handelsüblichen 48 %igen Lösung von N-Methylolacrylamid hergestellt. Die Menge des dosierten Vinylacetats wird jeweils um die Menge des zudosierten N-Methylolacrylamids auf 94,5 bzw. 94 und 93 Teile vermindert.

### Dispersion A2

Feststoffgehalt: 50,1 %
Viskosität Brookfield RVT 6/20: 17.800 mPa·s

### Dispersion A3

Feststoffgehalt: 50,0 %
Viskosität Brookfield RVT 6/20: 20.200 mPa·s

### Dispersion A4

Feststoffgehalt: 49,9 %
Viskosität Brookfield RVT 6/20: 29.400 mPa·s

### Beispiele 1 bis 15 und Vergleichsbeispiele V1 bis V4

Die Basisdispersionen A1 bis A4 werden (bis auf Beispiel 8) zunächst mit einer 10 %igen wäßrigen Lösung von Aluminiumchlorid abgemischt. Die entsprechenden Mengen an Festsubstanz AlCl₃, bezogen auf die Festsubstanz der Dispersion sind in Tabelle 1 zusammen mit den resultierenden pH-Werten der Mischungen angegeben. Nach einer Reifezeit von mindestens einem Tag erfolgt die Zumischung des Härters. Die Mengen des Härters finden sich ebenfalls in Tabelle 1.

### Ermittlung der Reißfestigkeiten an Buchenholzprüflingen nach Kochwasserbehandlung gemäß der Prüfnorm DIN EN 204/D4

Die Herstellung der Prüfkörper erfolgt nach der Vorgehensweise der DIN EN 205 (vormals DIN 53254). Die Verleimung und Prüfung wird unter Berücksichtigung folgender Kenndaten durchgeführt:

| | |
|---|---|
| Reifezeit nach Härterzusatz | 2 Stunden |
| Leimauftrag | 150 ± 20 g/m² beidseitiger Auftrag |
| Offene Wartezeit | 3 Minuten |
| Geschlossene Wartezeit | 3 Minuten |
| Preßzeit | 2 Stunden |
| Preßdruck | 0,7 ± 0,1 N/mm² |
| Anzahl Prüfkörper pro Prüffolge | 20 |
| Prüfung nach | 7 Tage Normalklima^{*)} |
| Lagerungsfolge gemäß | 6 Stunden in kochendem Wasser |
| DIN EN 204 D4/5 | 2 Stunden in kaltem Wasser |
| Prüftemperatur | 23 °C ± 2 °C |
| Vorschubgeschwindigkeit | 50 mm/Min. |
| Die Einordnung in die Beanspruchungsgruppe D4/5 erfolgt bei einer Reißfestigkeit von ≥ 4 N/mm². | |

| | |
|---|---|
| *⁾ 23 ± 2 °C und 50 ± 5 % relative Luftfeuchte | |

### Topfzeit:

Hierunter wird der Zeitraum verstanden, in dem die Klebstoffdispersion nach Härterzusatz mit einer Viskosität von ≤ 40.000 mPa·s nach Brookfield RVT 6/20 noch sicher fließfähig ist.

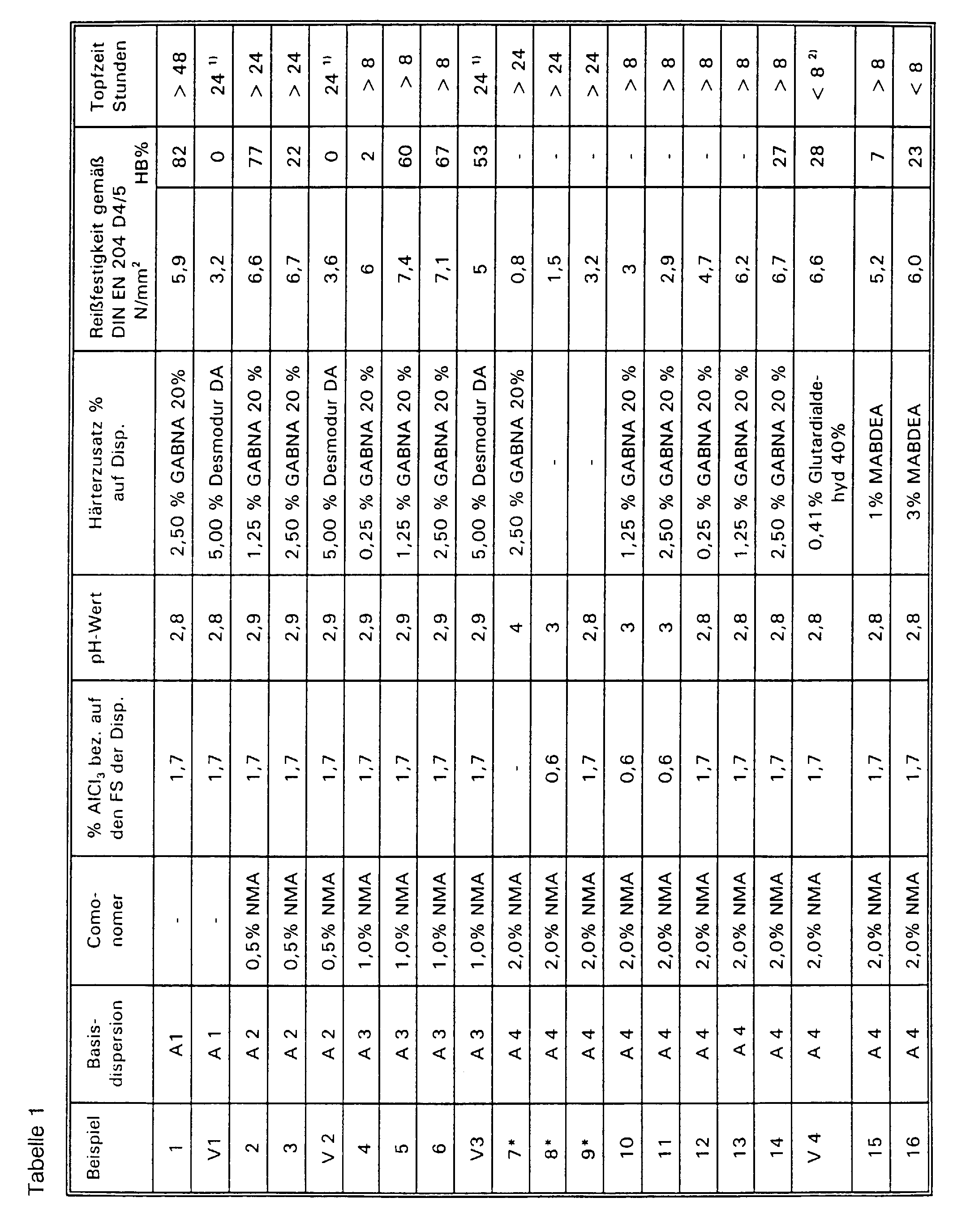

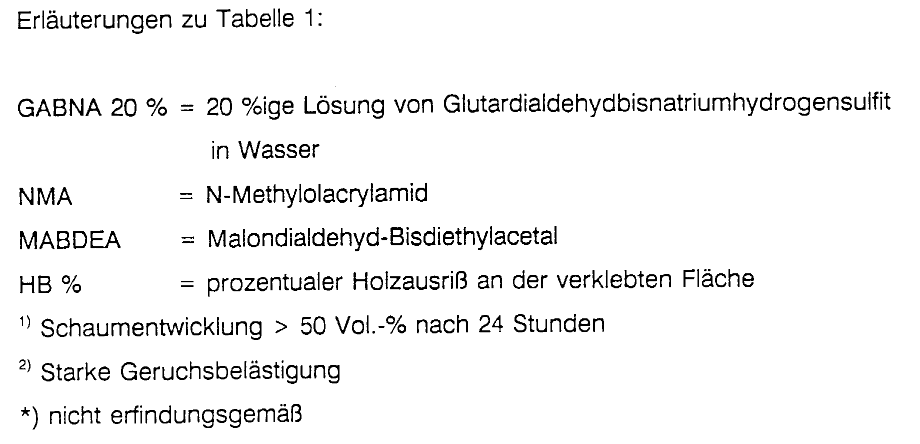

Die nicht der Erfindung entsprechenden Vergleichsbeispiele V1, V2 und V3 betreffen einen Kleber mit dem handelsüblichen Polyisocyanat-Vernetzer ®Desmodur DA (Bayer AG) gemäß dem Stand der Technik. Dem gegenüber weisen die zugehörigen erfindungsgemäßen Beispiele mit GABNA bei Verwendung wesentlich geringer Mengen deutlich bessere Reißfestigkeiten auf. Das Beispiel 1 weist zudem eine Topfzeit von 2 Tagen auf.

Das Vergleichsbeispiel V4 zeigt, daß bei Verwendung der im Vergleich zu Beispiel 14 eingesetzten Menge GABNA die äquimolare Menge Glutardialdehyd zwar vergleichbar hohe Kochwasserfestigkeiten erzielt werden, die Topfzeit der Mischung jedoch niedriger als 8 Stunden liegt und die Verarbeitbarkeit des Systems durch starke Geruchsbelästigung beeinträchtigt ist.

Die nicht erfindungsgemäßen Beispiele 7, 8 und 9 verdeutlichen, daß GABNA ohne Verwendung des sauren Aluminiumchlorids keinen Effekt zeigt und umgekehrt allein nur die Verwendung von Aluminiumchlorid auch bei Präsenz von 2% NMA im Copolymer keine Kochwasserbeständigkeit erbringt.

Erst die Kombination beider Komponenten ergibt einen signifikanten Effekt hinsichtlich der Wasserfestigkeit wie die Beispiele 10 bis 14 zeigen.

### Bestimmung von Kurzzeitbindefestigkeiten

Die Ermittlung der Abbindegeschwindigkeit erfolgt an einfachüberlappten Buchenholzprüfkörpern, die durch Verleimung von zwei jeweils 3 mm dicken, 85 mm langen und 20 mm breiten Buchenholztäfelchen unter Berücksichtigung folgender technischer Kenndaten hergestellt und geprüft werden:

| | |
|---|---|
| Reifezeit nach Härterzusatz | 2 Stunden |
| Preßzeit | 2,5 bzw. 5 Minuten |
| Preßdruck | 0,7 ± 0,1 N/mm² |
| Anzahl Prüfkörper pro Prüffolge | 10 |
| Verklebte Fläche | 300 mm² |
| Prüftemperatur | 23 °C ± 2 °C |
| Vorschubgeschwindigkeit | 50 mm/Min. |

Die Ergebnisse der Bindefestigkeiten nach 2,5 und 5 Minuten Preßzeit sind in Tabelle 2 zusammengefaßt:

**Tabelle 2**

| Beispiel | Basisdispersion | Härterzusatz | Reißfestigkeit N/mm² nach | |
|---|---|---|---|---|
| | | % auf Disp. | 2,5 Min | 5 Min |
| 4 | A 3 | 0,25 % GABNA 20 % | 1,1 | 2,5 |
| 5 | A 3 | 1,25 % GABNA 20 % | 0,9 | 2,3 |
| 6 | A 3 | 2,50 % GABNA 20 % | 1,3 | 2,8 |
| V 3 | A 3 | 5,00 % Desmodur DA | 0,7 | 1,9 |

Die erfindungsgemäßen Beispiele 4 - 6 zeichnen sich sowohl nach 2,5 Minuten als auch nach 5 Minuten Preßzeit gegenüber dem Vergleichsbeispiel V3 durch höhere Kurzzeitbindefestigkeiten aus.

### Bestimmung des freien Formaldehyds

Die Bestimmung des freien Formaldehyds in den Dispersionen erfolgt UV/VIS-spektrometrisch im Ultrazentrifugenserum der verdünnten Dispersion nach einer modifizierten Acetylaceton-Methode.

Die Acetylaceton-Methode ist in der Literatur beschrieben. (H. Petersen und N. Petri, Melliand Textilberichte 66, 363 (1985)).

Die Messung erfolgt nach 8-stündiger Reifezeit nach der Zumischung des Härters. Die Ergebnisse der Messungen sind in Tabelle 3 aufgeführt.

**Tabelle 3**

| Beispiel | Basisdispersion | Härterzusatz | freier HCHO |
|---|---|---|---|
| | | % auf Disp. | ppm |
| 9 | A 4 | ohne | 347 |
| 12 | A 4 | 0,25% GABNA 20% | 227 |
| 13 | A 4 | 1,25% GABNA 20% | 144 |
| 14 | A 4 | 2,50% GABNA 20% | 91 |

## Patentansprüche

1. Wäßriger Dispersionsklebstoff mit einem pH-Wert zwischen 2 und 6, enthaltend homo- oder copolymere Polyvinylester, polymere Schutzkolloide, mit den polymeren Schutzkolloiden komplexierbare wasserlösliche Verbindungen und zumindest teilweise maskierte Polyaldehyde mit mindestens 3 Kohlenstoffatomen, aus denen in sauren Medien Aldehydgruppen kontrolliert freisetzbar sind.

2. Dispersionsklebstoff nach Anspruch 1, dadurch gekennzeichnet, daß der Polyvinylester mindestens 50 Gew.-% Vinylacetat-Monomereinheiten enthält.

3. Dispersionsklebstoff nach Anspruch 1, dadurch gekennzeichnet, daß der Polyvinylester Monomereinheiten enthält aus der Gruppe der mehrfach ethylenisch ungesättigten Monomere, der nachträglich über Hydroxyl-, Carboxyl-, N-funktionellen Gruppen oder Carbonylgruppen vernetzbaren oder selbstvernetzenden Monomere.

4. Dispersionsklebstoff nach Anspruch 1, dadurch gekennzeichnet, daß als polymeres Schutzkolloid Polyvinylalkohol enthalten ist.

5. Dispersionsklebstoff nach Anspruch 1, dadurch gekennzeichnet, daß als mit den polymeren Schutzkolloiden komplexierbare Verbindungen wasserlösliche Metallsalze mit mehrwertigen Kationen enthalten sind.

6. Dispersionsklebstoff nach Anspruch 5, dadurch gekennzeichnet, daß die mehrwertigen Kationen in den komplexierbaren Metallsalzen Al(III) oder Zr(IV) sind.

7. Dispersionsklebstoff nach Anspruch 1, dadurch gekennzeichnet, daß als mit den polymeren Schutzkolloiden komplexierbare Verbindungen Säuren oder Salze mit Oxoanionen enthalten sind

8. Dispersionsklebstoff nach Anspruch 7, dadurch gekennzeichnet, daß die Oxoanionen Phosphat oder Borat sind.

9. Dispersionsklebstoff nach Anspruch 1, dadurch gekennzeichnet, daß die zumindest teilweise maskierten Polyaldehyde in einer Menge von 0,01 bis 5 Gew.-%, bezogen auf den Feststoff des Dispersionsklebstoffs, enthalten sind.

10. Dispersionsklebstoff nach Anspruch 1, dadurch gekennzeichnet, daß als maskierte Polyaldehyde teilweise oder vollständig maskierte Bisaldehyde enthalten sind.

11. Dispersionsklebstoff nach Anspruch 10, dadurch gekennzeichnet, daß als maskierte Bisaldehyde Derivate des Glutardialdehyds enthalten sind.

12. Dispersionsklebstoff nach Anspruch 1, dadurch gekennzeichnet, daß als maskierte Polyaldehyden deren Bisulfitaddukte enthalten sind.

13. Dispersionsklebstoff nach Anspruch 1, dadurch gekennzeichnet, daß der pH-Wert der wäßrigen Klebstoffdispersion zwischen 2,5 und 4 liegt.

14. Verfahren zur Herstellung eines Dispersionsklebstoffs nach Anspruch 1, dadurch gekennzeichnet, daß zunächst eine homo- oder copolymere Polyvinylester-Dispersion in Gegenwart von polymeren Schutzkolloiden hergestellt wird, die anschließend mit komplexierbaren Metallsalzen oder Säuren und zuletzt mit zumindest teilweise maskierten Polyaldehyden versetzt wird.

15. Verfahren zur Herstellung eines Dispersionsklebstoffs nach Anspruch 1, dadurch gekennzeichnet, daß eine homo- oder copolymere Polyvinylester-Dispersion in Gegenwart von polymeren Schutzkolloide hergestellt wird, die bei einem pH-Wert oberhalb von 4 zuerst mit zumindest teilweise maskierten Polyaldehyden und anschließend mit komplexierbaren Metallsalzen oder Säuren versetzt wird.

16. Verfahren zur Herstellung eines Dispersionsklebstoffs nach Anspruch 1, dadurch gekennzeichnet, daß zunächst eine homo- oder copolymere Polyvinylester-Dispersion in Gegenwart von polymeren Schutzkolloiden hergestellt wird, die bei einem pH-Wert oberhalb von 5 mit polyfunktionellen Aldehyden und Verbindungen, die in wäßrigen Systemen Hydrogensulfitionen liefern und anschließend mit komplexierbaren Metallsalzen oder Säuren versetzt wird.

17. Verwendung des Dispersionsklebstoffs nach Anspruchs 1 zum Verkleben von porösen oder semiporösen Substraten.

18. Verwendung des Dispersionsklebstoffs nach Anspruch 1 als wasser-resistenter Klebstoff für cellulosische Substrate.

## Claims

1. An aqueous emulsion adhesive having a pH of from 2 to 6, comprising homo- or copolymeric polyvinyl esters, polymeric protective colloids, water-soluble compounds which can be complexed with the polymeric protective colloids, and at least partially masked polyaldehydes from which aldehyde groups can be liberated in a controlled manner in acidic media.

2. An emulsion adhesive as claimed in claim 1, characterized in that the polyvinyl ester comprises at least 50% by weight of vinyl acetate monomer units.

3. An emulsion adhesive as claimed in claim 1, characterized in that the polyvinyl ester comprises monomer units from the group consisting of poly(ethylenically unsaturated) monomers and monomers which are subsequently crosslinkable via hydroxyl groups, carboxyl gropups, N-functional groups or carbonyl groups or are self-crosslinking.

4. An emulsion adhesive as claimed in claim 1, characterized in that the polymeric protective colloid is polyvinyl alcohol.

5. An emulsion adhesive as claimed in claim 1, characterized in that the compounds which can be complexed with the polymeric protective colloids are water-soluble metal salts containing polyvalent cations.

6. An emulsion adhesive as claimed in claim 5, characterized in that the polyvalent cations in the complexible metal salts are Al(III) or Zr(IV).

7. An emulsion adhesive as claimed in claim 1, characterized in that the compounds which can be complexed with polymeric protective colloids are acids or salts containing oxo anions.

8. An emulsion adhesive as claimed in claim 7, characterized in that the oxo anions are phosphate or borate.

9. An emulsion adhesive as claimed in claim 1, characterized in that the at least partially masked polyaldehydes are present in an amount of from 0.01 to 5% by weight, based on the solids content of the emulsion adhesive.

10. An emulsion adhesive as claimed in claim 1, characterized in that the masked polyaldehydes are partially or fully masked bisaldehydes.

11. An emulsion adhesive as claimed in claim 10, characterized in that the masked bisaldehydes are derivatives of glutaric dialdehyde.

12. An emulsion adhesive as claimed in claim 1, characterized in that the masked polyaldehydes are their bisulfite adducts.

13. An emulsion adhesive as claimed in claim 1, characterized in that the pH of the aqueous adhesive emulsion is from 2.5 to 4.

14. A process for the preparation of an emulsion adhesive as claimed in claim 1 characterized in that a homo- or copolymeric polyvinyl ester emulsion is prepared in the presence of polymeric protective colloids, which at a pH above 4 is first reacted with at least partially masked polyaldehydes and is then mixed with complexible metal salts or acids.

15. A process for the preparation of an emulsion adhesive as claimed in claim 1, which comprises preparing a homo- or copolymeric polyvinyl ester emulsion in the presence of polymeric protective colloids, and then, at a pH above 4, firstly adding at least partially masked polyaldehydes and subsequently complexible metal salts or acids.

16. A process for the preparation of an emulsion adhesive as claimed in claim 1, which comprises first preparing a homo- or copolymeric polyvinyl ester emulsion in the presence of polymeric protective colloids, and then adding, at a pH above 5, polyfunctional aldehydes and compounds which supply bisulfite ions in aqueous systems and subsequently adding complexible metal salts or acids.

17. Use of the emulsion adhesive as claimed in claim 1 for bonding porous or semiporous substrates.

18. Use of the emulsion adhesive as claimed in claim 1 as a water-resistant adhesive for cellulosic substrates.

## Revendications

1. Adhésif en dispersion aqueuse avec un pH compris entre 2 et 6, contenant des esters polyvinyliques homo- ou copolymères, des colloïdes protecteurs polymères, des composés hydrosolubles complexables avec les colloïdes protecteurs et des polyaldéhydes au moins partiellement masqués comportant au moins 3 atomes de carbone, dont on peut libérer de façon contrôlée les groupes aldéhydes en milieu acide.

2. Adhésif en dispersion selon la revendication 1, caractérisé en ce que l'ester polyvinylique contient au moins 50 % en poids de motifs monomères acétate de vinyle.

3. Adhésif en dispersion selon la revendication 1, caractérisé en ce que l'ester polyvinylique contient des motifs monomères pris dans le groupe de monomères à insaturation éthylénique multiple, comportant des monomères auto-réticulants ou réticulables ultérieurement par l'intermédiaire des groupes fonctionnels hydroxyle, carboxyle, azotés ou des groupes carbonyle.

4. Adhésif en dispersion sel-on la revendication 1, caractérisé en ce qu'il contient du poly(alcool vinylique) en tant que colloïde protecteur polymère.

5. Adhésif en dispersion selon la revendication 1, caractérisé en ce qu'il contient des sels métalliques hydrosolubles avec des cations multivalents en tant que composés complexables avec des colloïdes protecteurs polymères.

6. Adhésif en dispersion aqueuse selon la revendication 5, caractérisé en ce que les cations multivalents dans les sels métalliques complexables sont Al(III) ou Zr(IV).

7. Adhésif en dispersion selon la revendication 1, caractérisé en ce qu'il contient des acides ou sels avec des anions oxo en tant que composés complexables avec les colloïdes protecteurs polymères.

8. Adhésif en dispersion selon la revendication 7, caractérisé en ce que les anions oxo sont le phosphate ou le borate.

9. Adhésif en dispersion aqueuse selon la revendication 1, caractérisé en ce qu'il contient les polyaldéhydes au moins partiellement masqués en une quantité de 0,01 à 5 % en poids, par rapport à l'extrait sec de l'adhésif en dispersion.

10. Adhésif en dispersion selon la revendication 1, caractérisé en ce qu'il contient des bisaldéhydes partiellement ou complètement masqués en tant que polyaldéhydes masqués.

11. Adhésif en dispersion selon la revendication 10, caractérisé en ce qu'il contient des dérivés de glutardialdéhyd en tant que bisaldéhydes masqués.

12. Adhésif en dispersion aqueuse selon la revendication 1, caractérisé en ce qu'il contient en tant que polyaldéhydes masqués, leurs adduits avec le bisulfite .

13. Adhésif en dispersion selon la revendication 1, caractérisé en ce que la valeur du pH des dispersions d'adhésifs aqueuses est comprise entre 2,5 et 4.

14. Procédé de préparation d'un adhésif en dispersion selon la revendication 1, caractérisé en ce que l'on prépare d'abord une dispersion d'esters polyvinyliques homo- ou copolymères en présence de colloïdes protecteurs polymères, à laquelle on ajoute ensuite des acides ou des sels métalliques complexables et finalement, des polyaldéhydes au moins partiellement masqués.

15. Procédé de préparation d'un adhésif en dispersion selon la revendication 1, caractérisé en ce que l'on prépare une dispersion d'esters polyvinyliques homo- ou copolymères en présence de colloïdes protecteurs polymères, à laquelle on ajoute, à un pH supérieur à 4, d'abord des polyaldéhydes au moins partiellement masqués et ensuite des acides ou sels complexables.

16. Procédé de préparation d'un adhésif en dispersion selon la revendication 1, caractérisé en ce que l'on prépare en premier lieu une dispersion d'esters polyvinyliques homo- ou copolymères en présence de colloïdes protecteurs polymères, à laquelle on ajoute, à un pH supérieur à 5, des aldéhydes polyfonctionnels et des composés qui donnent des ions bisulfites dans des systèmes aqueux et ensuite des acides ou sels métalliques complexables.

17. Utilisation de l'adhésif en dispersion selon la revendication 1, pour coller des substrats poreux ou semi-poreux.

18. Utilisation de l'adhésif en dispersion selon la revendication 1, comme adhésif inerte à l'eau pour des substrats cellulosiques.
